# EUROPEAN PATENT APPLICATION

(11) **EP 3 174 287 A1**
(43) Date of publication of application: **31.05.2017**
(21) Application number: 15196426.9
(22) Date of filing: 26.11.2015
(51) Int. Cl.: H04N 5/60, G06F 3/01, H04N 21/4223, H04N 21/439, H04N 21/442, H04S 7/00, G06F 3/0484, H04N 5/57

(54) **AUDIO AND VIDEO PROCESSING SYSTEM, DISPLAY DEVICE AND METHOD**

(71) Applicant: Vestel Elektronik Sanayi ve Ticaret A.S., 45030 Manisa (TR)
(72) Inventor: KIRISKEN, Barbaros, 45030 Manisa (TR)
(74) Representative: Ascherl, Andreas

(57) **Abstract**

The present invention provides an audio and video processing system (1; 99) for a display device (2; 100) with audio reproduction elements (5;102a, 102b; 108), the audio- and video processing system (1; 99) comprising an eye tracker (9; 107), which tracks eye movements (110; 110a, 110b; 301; 403) of a number of users (11, 111) of the display device (2; 100), while the users (11, 111) watch a video (6) comprising a video stream (7) and an audio stream (8; 201; 501) on the display device (2; 100), and an audio processor (10; 125), which is coupled to the eye tracker (9; 107) and which modifies the audio stream (8; 201; 501) based on the tracked eye movements (110; 110a, 110b; 301; 403) and outputs the modified audio stream (8; 201; 501) with the video stream (7) on the display device (2; 100). Furthermore, the present invention provides a respective display device (2; 100) and a respective method.

## Description

### TECHNICAL FIELD

The invention relates to an audio and video processing system for a display device with audio reproduction elements. Furthermore, the present invention relates to respective display device and a method for audio and video processing for a display device.

### BACKGROUND

Although applicable to any system that reproduces videos to users, the present invention will be described herein in conjunction with televisions.

Users watching e.g. a movie on a television want to have an immersive viewing experience. That means that users want to have the feeling not only to watch a movie but also to be part of the movie or be immersed in the movie.

To support the users feeling of immersion, bigger screens and wide screen viewing formats were introduced. Furthermore, methods of covering or overlapping the surroundings of a television have been introduced, like illuminating the wall behind the screen in the colors of the image being displayed on the screen. Furthermore, eye tracking systems can be used to enhance the user's experience based on the user's gaze.

There is a need for improving the user experience while watching a movie.

### SUMMARY

The present invention provides an audio and video processing system with the features of claim 1, a display device with the features of claim 9, and a method with the features of claim 10.

Accordingly an audio and video processing system for a display device with audio reproduction elements, e.g. a television or a computer with a screen and speakers, comprises an eye tracker, which tracks eye movements of a number, i.e. one or more, of users of the display device, while the users watch a video comprising a video stream and an audio stream on the display device, and an audio processor, which is coupled to the eye tracker and which modifies the audio stream based on the tracked eye movements and outputs the modified audio stream with the video stream on the display device.

The display device comprises an audio and video processing system according to the present invention.

Finally, the method for audio and video processing for a display device with audio reproduction elements comprises tracking eye movements of a number of users of the display device, while the users watch a video comprising a video stream and an audio stream on the display device, and modifying the audio stream based on the tracked eye movements, and outputting the modified audio stream with the video stream on the display device.

The present invention can e.g. be used with display devices like LED, LCD or OLED displays, televisions, computer screens, screens with a projector or the like. Therefore, the audio reproduction elements can be any element that can output a sound, e.g. of a video, which is displayed on the display device. Such elements can e.g. be stereo speakers, a surround sound system like a 5.1 or more speaker set, or the like. The term 5.1 represents five satellite speakers and one subwoofer. It is to be understood that any other sound reproduction element, like sound bars or speaker sets with other numbers of speakers than 5.1 can also be used.

The present invention is based on the finding that the audio stream in a video is an important aspect of the overall user experience.

Therefore, the audio- and video processing system uses an eye tracker, which continuously tracks the eye movements of users in front of the display device, e.g. users watching a video displayed on a television. The eye tracker can be any type of eye tracker, like e.g. a camera based eye tracker or a pupil-center-cornea-reflection based eye tracker, or the like.

Based on the tracked eye movements in contrast to known methods the audio processor of the present invention then modifies the audio stream of the video to enhance the users experience when watching e.g. a movie.

In contrast to known eye tracking systems for televisions, the present invention cannot only provide visual effects to enhance the user experience. Instead, the present invention can enhance the auditive experience of a user based on his eye movements and the screen sections the users looks at. Therefore, the present invention provides a more immersive experience to the users.

Further embodiments of the present invention are subject of the further subclaims and of the following description, referring to the drawings.

In one embodiment the, eye tracker can comprise a movement analyzer configured to analyze the tracked eye movement and extract from the tracked eye movement at least a saccade movement and/or a smooth pursuit movement and/or a fixation and/or a vergence and/or a vestibulo-ocular reflex of the eyes of the users and/or speed of movement and/or direction of movement. A fixation refers to the focusing of the eyes to a single point on the display device and keeping the eyes stationary. Saccade in contrast is a quick, simultaneous movement of both eyes between two phases of fixation in the same direction. Smooth pursuit is a movement similar to saccade, but in smooth pursuit, a user tracks a moving object intentionally. The vestibulo-ocular reflex is also known as the oculocephalic reflex, and is a reflex eye movement that stabilize images on the retinas during head movement by producing eye movements in the direction opposite to head movement, thus preserving the image on the center of the visual field. Vergence is the simultaneous movement of both eyes in opposite directions to obtain binocular vision. When a person looks at an object, the eyes rotate around a vertical axis so that the projection of the image is in the center of the retina in both eyes. To look at an object closer by, the eyes rotate towards each other (convergence), while for an object farther away they rotate away from each other (divergence).

In the present invention vergence and the vestibular ocular reflex can be seen as fixation. Therefore, in one embodiment the movement analyzer analyzes saccade, fixation and smooth pursuit only. This reduces the complexity of the movement analyzer. The movement analyzer e.g. uses pattern recognition algorithms for analyzing the different movements.

In one embodiment, the audio and video processing system can comprise an object identifier configured to identify visual objects displayed on the display device based on the tracked eye movement. The audio processor can be configured to modify in the audio stream sounds, which are related to the identified visual objects. A visual object can be any object, which is shown on the display device, e.g. in a video. If the object identifier identifies the objects a user is looking at, the respective sounds belonging to said object can easily be adapted accordingly. For example, a user can look at, i.e. smoothly pursue, a vehicle, which crosses the display device from one side of the screen to the other. As an alternative, the user can look at stationary objects, like a speaking person, or another object like a tree or the like.

In a further embodiment the object identifier can be configured to identify the foveal area a user is looking at and identify the respective object by applying an image recognition algorithm to a section of the displayed image around said foveal area, especially by applying a contour detection algorithm and extracting the contoured object from the background and applying the image or object recognition algorithm to the extracted object. The term foveal area refers to the target of the user's gaze, e.g. the section of the user's field of view, which is received by the fovea central is, which is responsible for sharp central vision, also called foveal vision, which is necessary in humans for activities where visual detail is of primary importance, such as reading or watching a video. Therefore, the foveal area defines the center of the image, at which the user is looking. Using an image or pattern recognition algorithm in a section, e.g. a quadratic or round section, of the displayed image around said foveal area constitutes a simple method of identifying the respective object.

In one embodiment the audio processor can be configured to extract sounds in the audio stream pertaining to the identified objects, and to modify, especially to apply audio filters and/or amplifiers and/or fade in effects and/or fade out effects, to the sounds in the audio stream pertaining to the identified objects, and to combine the audio stream with the modified sounds. Audio filters and/or amplifiers can e.g. be especially applied if from the tracked eye movement a fixation and/or a vergence were extracted. In one embodiment, e.g. if saccade or smooth pursuit movement was detected, effects like fade in effects and/or fade out effects can be applied. This allows e.g. adding emphasis to the sounds, which pertain to objects a user is momentarily watching with special interest. If e.g. a user looks at a speaking person, the sound of the speech of the person can e.g. be amplified for better understanding.

In another embodiment, the audio processor can be configured to modify the audio stream to place the sounds of the identified objects at the place the respective user is looking at. Especially with surround sound systems or sound bars, it becomes possible to overlay the auditive location of an object exactly with the observed visual position of an object.

In one embodiment, the sounds in the audio stream pertaining to the identified objects can be provided as separate sound objects in the audio stream. Additionally or alternatively, the audio processor can be configured to extract the sounds in the audio stream pertaining to the identified objects based on micro-movements of the objects in the video stream. The term sound objects, also called audio objects, refers to sound data, which pertains to the sounds corresponding to visual objects being separately provided or being tagged otherwise in the audio stream, such that they can easily be taken and modified by the audio processor. In this case, little computing effort is needed to extract the sounds in the audio stream pertaining to the identified objects. If no such sound or audio objects are provided, the respective sounds can still be recovered from the image or video by analyzing micro-movements or micro-changes of the respective object in the video. This technique is also referred to as "Visual Microphone".

Further, the type of a detected object can be determined with an object recognition algorithm and the sounds of the respective type of object can be extracted from the audio stream e.g. by comparison with reference sounds of the respective type of object.

In one embodiment the audio and video processing system can comprise a video processor, configured to provide visual effects in the display device based on the detected tracked eye movements, and especially locally dimming up or dimming down a section of the displayed video stream and/or changing the decoding bitrate of the video according to the detected tracked eye movements. The brightness of the video can e.g. be modified, lowered or enhanced, by transitions of a backlight of the display device, if local dimming is available. Further, if local backlight dimming is available, also backlight transitions can be added between dimming zones, i.e. zones of the video with different dimming settings. Furthermore, color shifting is also possible during this transition.

### BRIEF DESCRIPTION OF THE DRAWINGS

For a more complete understanding of the present invention and advantages thereof, reference is now made to the following description taken in conjunction with the accompanying drawings. The invention is explained in more detail below using exemplary embodiments, which are specified in the schematic figures of the drawings, in which:
Fig. 1 shows a block diagram of an embodiment of an audio and video processing system according to the present invention;
Fig. 2 shows a block diagram of an embodiment of a display device according to the present invention;
Fig. 3 shows a signal flow diagram of audio data according to the present invention;
Fig. 4 shows another block diagram of the display device of Fig. 2;
Fig. 5 shows another signal flow diagram of audio data according to the present invention;
Fig. 6 shows another block diagram the display device of Fig. 2; and
Fig. 7 shows a flow diagram of an embodiment of the method according to the present invention.

In the figures like reference signs denote like elements unless stated otherwise.

### DETAILED DESCRIPTION OF THE DRAWINGS

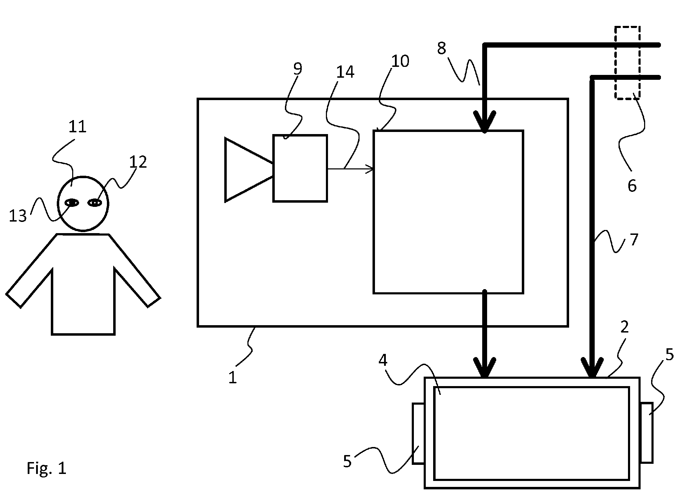

The audio and video processing system 1 in Fig. 1 is coupled to a television 2, which comprises a screen 4 and stereo speakers 5. In Fig. 1 the audio and video processing system 1 is just exemplarily shown external to the television 2 for the sake of clarity. It is to be understood that the audio and video processing system 1 can be incorporated into the television 2 or any other respective display device. The functions of the audio and video processing system 1 can especially be incorporated into a controller of the respective display device as a software component.

A video 6 comprising a video stream 7 and an audio stream 8 is provided to the television 2 and the audio and video processing system 1, wherein the audio and video processing system 1 in the example only uses and modifies the audio stream 8.

In the audio and video processing system 1 an eye tracker 9 tracks the movements of a user's eyes 12, 13 and provides the information 14 about these movements to the audio processor 10. The audio processor 10 uses the information 14 about the eye movements of the user 11 and modifies the audio stream 8 accordingly. In Fig. 1 the audio processor 10 only uses and modifies the audio stream 8. It is to be understood, that the audio processor 10 or any other element of the audio and video processing system 1 can also use the video stream 7 together with the information 14 about the user's eye movements, as a basis for modifying the audio stream 8. The modifications of the audio stream 8 can comprise any type of modification, which can be applied to an audio stream, like amplifications or gain adjustments and audio filters. Further details of the modification of the audio stream 8 and possible modifications of the video stream 7 are explained in more details below.

The eye tracker 9 of Fig. 1 is a camera based eye tracker 9, which uses visible light to detect the movements of the user's eyes 12, 13 based on a video of the users face taken by the eye tracker's 9 camera. From the position of the camera and the video or single images of the user's eyes 12, 13, the eye tracker 9 can then deduce where the user 11 is looking at and detect movements of the eyes 12, 13.

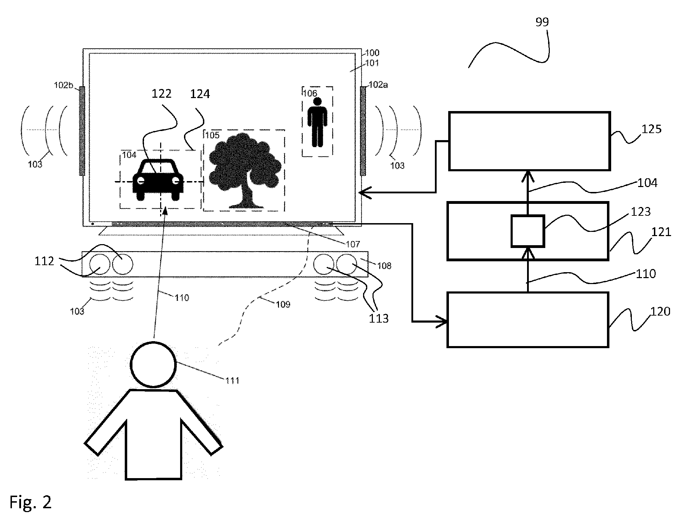

In Fig. 2 the audio and video processing system 99 is incorporated into a television 100, which is just exemplarily displaying a car 104, a tree 105 and a person 106. In addition to the speakers 102a, 102b a sound bar 108 is positioned underneath the television 100. Together the speakers 102a, 102b and the sound bar 108 output sound 103 to the user 111, which is watching the television 100.

The eye tracker 107 is a so-called pupil-center-cornea-reflection, or PCCR eye tracker, which emits infrared light 109 and uses a camera to record an image of the user's face under infrared light 109 illumination, and detects the reflections of the infrared light on the pupil center of the user 111.

In Fig. 2 the eye tracker 107 couples to a movement analyzer 120, which analyzes from the information received from the eye tracker 107 the single movements 110 of the user's eyes. The movements 110 the movement analyzer 120 can detect are a saccade movement, a smooth pursuit movement, a fixation or vergence, and a vestibulo-ocular reflex of the eyes of the user 111. Furthermore the movement analyzer 120 can also detect the speed of movement, and the direction of movement of the user's eyes.

In the scene of Fig. 2, the user 111 is fixedly staring at the vehicle 104 on the screen 101. The movement analyzer 120 will therefore detect a fixation 110.

In order to detect the different movements, like the fixation 110, the movement analyzer 120 can use different motion detection and tracking techniques of computer vision. For example, the movement analyzer 120 can first detect the pupils of the user 111 using pattern recognition algorithms and then track their movement using tracking techniques. The movement analyzer 120 can then qualify the movements according to the speed and direction of movement.

For example if the speed of movement is very low, i.e. below a given threshold value, or the user's eyes are not moving at all, i.e. the speed of movement is 0 m/s, the movement can be qualified as fixation. If the speed of movement is higher than a first threshold and lower than a second threshold and the direction of the movement is constant, the movement can be qualified as smooth pursuit movement. Finally, if the speed of the movement is higher than the second threshold and the direction of the movements changes arbitrarily, these movements can be qualified as saccade movements.

As already stated above, in Fig. 2 the eye tracker 107 and the movement analyzer 120 will detect a fixation movement 110 and provide this information to the object identifier 121. The object identifier 121 will detect, based on the fixation movement 110 information, which object on the screen 101 the user 111 is looking at. To do so, the object identifier 121 will determine the foveal area 122 the user 111 is currently looking at. In this case the center of the vehicle 104. Furthermore, the object identifier 121 will apply e.g. an edge recognition algorithm 123, also called contour detection algorithm 123, or other object detection algorithms to a section 124 of the image, which is displayed on the screen 101. The contour detection algorithm 123 will result in the contour of the vehicle 104 being separated from the background of the image. Furthermore, the contour detection algorithm 123 or any other algorithm can then identify the type of object, in this case a vehicle 104. If the user were staring at the tree 105 or the person 106, the algorithm would detect the respective object 105, 106.

The object identifier 121 will then provide the information about the object 104 to the audio processor 125.

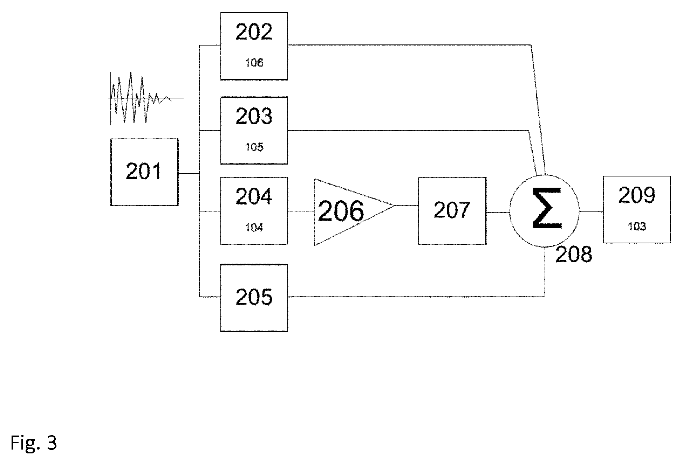

The audio processor 125 uses the information about the vehicle 104 to identify in the audio stream 201 the respective sounds 204, which correspond to the vehicle 104 (See Fig. 3).

The single sound 204 pertaining to the identified vehicle 104 can e.g. be provided as separate sound object 204 in the audio stream 201. In this case the audio processor 125 can simply select the respective section 204 of the audio stream 201. In such a case the sounds 202, 203, for the tree 105 and the person 106 can also be provided separately. Furthermore, the background noise 205 can also be provided in the audio stream 201 (see Fig. 3).

As an alternative or in addition the audio processor 125 can extract the sounds 202, 203, 204 in the audio stream 201 pertaining to the identified objects 104, 105, 106 based on micro-movements of the objects 104, 105, 106 in the video stream 7. This technique is also called a visual microphone.

The audio processor 125 can also compare the sounds in the audio stream 201 to reference sounds for every identified object to extract the single sounds 202, 204, 204.

In Fig. 2 the audio processor 125 amplifies the sounds 204, which represent the vehicle 104. The respective signal flow is shown in Fig. 3.

The audio stream 201 comprises all sounds 202, 203, 204, and 205 of the respective video. The audio processor 125 separates at least the sound 204 of the identified object, in this case the vehicle 104, from the audio stream 201. In Fig. 3 the sounds of the tree 105, e.g. moving leaves, and the person 106, e.g. speech, are also provided as separate sounds 202, 203 with the background noise 205. This is e.g. the case, when the sounds are already provided as separate sound objects 202, 203, 204, and 205 in the audio stream 201.

In Fig. 3 the sound 204, which pertains to the vehicle 104, is amplified by gain stage 206. Furthermore, effects 207, like noise attenuation or the like, are applied. Finally, adder 208 combines the sounds 202, 203, 204 and 205 to generate an output 209, which is then reproduced by the television 100.

The effects 207 can comprises a wide range of different filters and effects, which can be applied over extracted sounds 202, 203, 204 from objects 104, 105, 106 inside the audio stream 201. Exemplary effects are high pass, band pass, first order, second order filters, fade in/out effects or delay (echo), other chorus, flanger effects or normalizer, also an equalizer can be used to make adjustments in the frequency domain.

Directionality of the perception of sounds results mainly from the high frequency or trebble parts of a sound 202, 203, 204. This effect can be used in an exemplary case, where high pass and low pass filters are applied to a sound 202, 203, 204. For example a high pass filter can be applied to a sound 202, 203, 204 and gain and delay can then be applied on the high pass filtered part. Finally the modified high frequency part can be combined with the reminder low pass part of the sound 202, 203, 204. The user will therefore have an improved sensation e.g. of an approaching car 104 if he/she looks at the car 104. The reverse action is also possible if the car the 104 moves farther away from the user.

The speed of increasing or the change rate of the gain of the amplifier, which is applied to the respective sound 202, 203, 204, can e.g. be proportional to the smooth pursuit speed of the user's eyes or it can be instantaneous if a saccade movement is performed by the user. If the user looks at another object 104, 105, 106 or another part of the screen, there is no need to emphasize the sound of the car 104. In that case the sound of the car 104 is reproduced with no effect.

Other example effects can be a delay or echo effect. If the user performs a smooth pursuit from a still sound source, which is in the background of the displayed image, to nearer objects, an increasing delay or echo effect can be added to the sound pertaining to the background object. This can especially enhance the user's sensation if the audio and video pertain to an indoor scene and the user looks from a sound source farther away from him to a sound source, which is nearer to him.

Other exemplary effects can be a fade-in and fade-out effect, where a user smoothly pursues with his/her eyes between two objects, i.e. he looks from one object to the other not with a saccade movement but with a smoot pursuit movement. In such a case the sound transition can be smoothed between objects, which also enhances the user's sensation.

It is to be understood that the examples given are merely examples and any other type of effect can be applied to the sounds 202, 203, 204, and that the scope of invention is not limited to these exemplary cases, filters and effects.

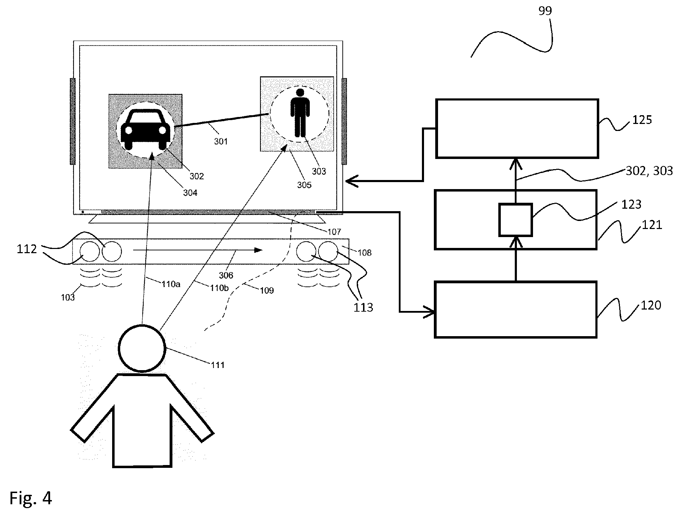

In Fig. 4 the television 100 shows two objects, a vehicle 302 and a person 303. In Fig. 4 the user's eyes where first fixed 110a at the vehicle 302, with a saccade movement 301 the user then moved his gaze to the person 303, which is then fixed 110b.

In Fig. 4 not only the sounds 103 are modified. Instead, also the image displayed to the user 111 is modified.

The audio and video processing system 99 modifies the sounds 103 by moving the direction from which the sounds 103 are emitted to the spot, the user is looking at. Accordingly, at first the sounds 103 are played with more volume at the left speakers 112 of the sound bar 108, while the user 111 is looking at the vehicle 302. When the user 111 moves his gaze toward the person 303 the sounds corresponding to the person 303 are not only amplified, but the sounds are also played with higher volume at the right speakers 113 of the sound bar 108 than at the left speakers 112 of the sound bar 108.

The image on the screen 101 shows two visual effects 304, 305. After the user 111 moves his gaze toward the person 303, the section around the vehicle 302 is dimmed down and the section around the person is highlighted or dimmed up. The dimming and highlighting can e.g. be performed by controlling a backlight of the television 100 or by processing the respective video stream.

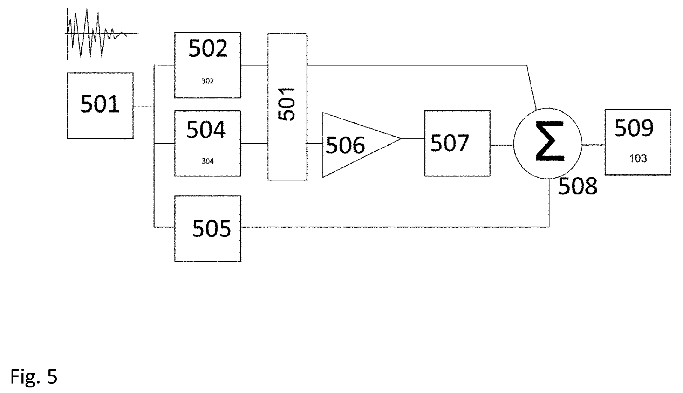

The signal flow diagram of Fig. 5 is based on the signal flow diagram of Fig. 3 and adapted to Fig. 4. After performing the eye movement, the user's eyes are fixed on the person 304. Therefore, the sound 504 is amplified by gain stage 506 and modified by sound effects 507.

During the transition from the vehicle 302 to the person 304, the corresponding sounds 502 and 504 can be modified by the transitional effects 501, which can e.g. fade out the sound 502 and fade in the sound 504. Wherein fade out and fade in refers to changing the volume of the single sounds 502, 504, and not necessarily to totally fading out a sound.

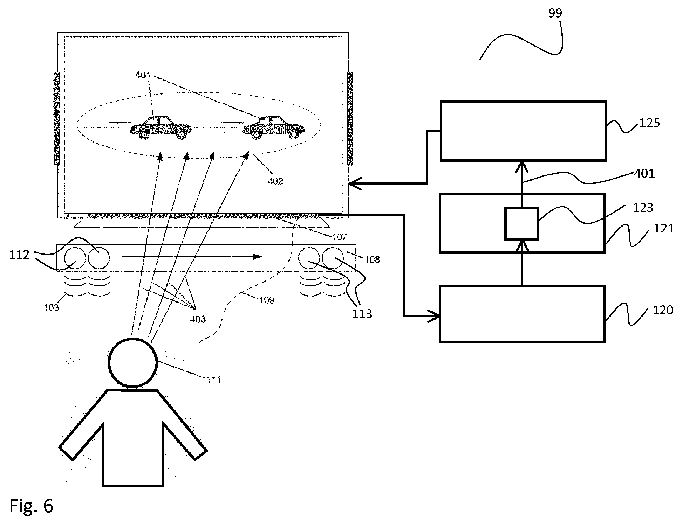

The screen 101 of Fig. 6 shows a vehicle 401, which is moving from the left of the screen 101 to the right of the screen 101. The user 111 follows the vehicle 401 with his eyes, resulting in a smooth pursuit movement 403. As this movement is detected the respective sound can e.g. be shifted from the left speakers 112 of the sound bar 108 to the right speakers 113 of the sound bar 108.

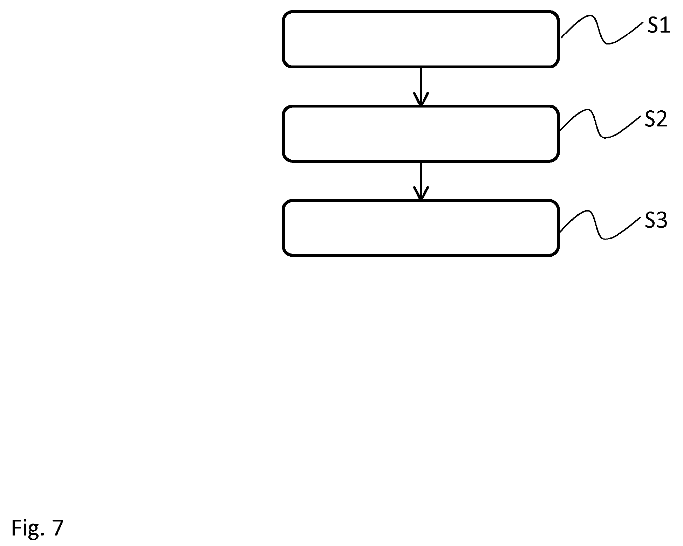

Fig. 7 shows a flow diagram of a method for audio and video processing for a display device 2; 100 with audio reproduction elements 5, 102a, 102b; 108.

The method starts in step S1 with tracking eye movements 110; 110a, 110b; 301; 403 of a number of users 11, 111 of the display device 2; 100. This tracking of the eye movement S1 is preformed while the users 11, 111 watch a video 6 comprising a video stream 7 and an audio stream 8; 201; 501 on the display device 2; 100. If movement of the eyes 12, 13 of the user 11, 111 is detected the audio stream 8; 201; 501 is modified S2 based on the tracked eye movements 110; 110a, 110b; 301; 403. Finally the modified audio stream 8; 201; 501 is output with the video stream 7 on the display device 2; 100.

Tracking S1 the eye movements comprises detecting at least a saccade movement, a smooth pursuit movement, a fixation, a vergence, a vestibulo-ocular reflex of the eyes 12, 13 of the users 11, 111, and/or a speed of movement and direction of movement.

The method can further comprise identifying visual objects 104, 105, 106; 302; 303; 401 displayed on the display device 2; 100. The identification can be based on the tracked eye movement 110; 110a, 110b; 301; 403. Further, modifying S2 the audio stream 8; 201; 501 can comprise modifying in the audio stream 8; 201; 501 sounds 202, 203, 204; 502, 504, which are related to the identified visual objects 104, 105, 106; 302; 303; 401.

When identifying visual objects 104, 105, 106; 302; 303; 401 the foveal area 122 a user 11, 111 is looking at can be identified. Further, the respective object 104, 105, 106; 302; 303; 401 can be identified by applying an image recognition algorithm 123 to a section 124; 402 of the displayed image around said foveal area 122. For example a contour detection algorithm 123 can be applied to said area 122 and the contoured object 104, 105, 106; 302; 303; 401 can be extracted from the background. Further the object recognition algorithm 123 can be applied to the extracted object 104, 105, 106; 302; 303; 401, to identify the type of object 104, 105, 106; 302; 303; 401 that was detected.

The audio stream 8; 201; 501 can be modified by extracting the sounds 202, 203, 204; 502, 504 in the audio stream 8; 201; 501, which pertain to the identified objects 104, 105, 106; 302; 303; 401. Then, the sounds 202, 203, 204; 502, 504 in the audio stream 8; 201; 501 pertaining to the identified objects 104, 105, 106; 302; 303; 401 can be modified, e.g. by applying audio filters and/or amplifiers and/or fade in effects and/or fade out effects. Finally, the audio stream 8; 201; 501 can be combined with the modified sounds 202, 203, 204; 502, 504.

Modifying the audio stream 8; 201; 501 can further comprise placing the sounds 202, 203, 204; 502, 504 of the identified objects 104, 105, 106; 302; 303; 401 at the place the respective user 11, 111 is looking at in the video 6, e.g. with a surround sound system.

To distinguish the different sound 202, 203, 204; 502, 504, these can be provided in the audio stream 8; 201; 501 as separate sound objects 202, 203, 204; 502, 504 in the audio stream 8; 201; 501. As an alternative the sounds 202, 203, 204; 502, 504 in the audio stream 8; 201; 501 pertaining to the identified objects 104, 105, 106; 302; 303; 401 can be extracted based on micro-movements of the objects 104, 105, 106; 302; 303; 401 in the video stream 7.

In addition to the audio effects further visual effects 304, 305 can be provided in the display device 2; 100 based on the detected tracked eye movements 110; 110a, 110b; 301; 403. Such effects can e.g. comprise locally dimming up or dimming down a section 124; 402 of the displayed video stream 7 or changing the decoding bitrate of the video 6 according to the detected tracked eye movements 110; 110a, 110b; 301; 403.

Although specific embodiments have been illustrated and described herein, it will be appreciated by those of ordinary skill in the art that a variety of alternate and/or equivalent implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents. Generally, this application is intended to cover any adaptations or variations of the specific embodiments discussed herein.

The present invention provides an audio and video processing system for a display device with audio reproduction elements, the audio- and video processing system comprising an eye tracker, which tracks eye movements of a number of users of the display device, while the users watch a video comprising a video stream and an audio stream on the display device, and an audio processor, which is coupled to the eye tracker and which modifies the audio stream based on the tracked eye movements and outputs the modified audio stream with the video stream on the display device. Furthermore, the present invention provides a respective display device and a respective method.

### List of reference signs

- 1; 99: audio and video processing system
- 2; 100: display device
- 4; 101: display
- 5; 102a, 102b; 108, 112, 113: speakers
- 6: video
- 7: video stream
- 8; 201; 501: audio stream
- 9; 107: eye tracker
- 109: Infrared light
- 10; 125: audio processor
- 110; 110a, 110b; 301; 403: eye movements
- 11, 111: user
- 12, 13: eyes
- 14: information
- 120: movement analyzer
- 121: object identifier
- 122: foveal area
- 123: algorithm
- 124; 402: section
- 104, 105, 106; 302; 303; 401: objects
- 103: sound
- 304, 305: visual effects
- 306: sound direction
- 202, 203, 204; 502, 504: sounds of objects
- 205, 505: remaining sound
- 206, 506: gain stage
- 207; 501, 507: effects
- 208, 508: adder
- 209, 509: output
- S1-S3: method steps

## Claims

1. Audio and video processing system (1; 99) for a display device (2; 100) with audio reproduction elements (5;102a, 102b; 108), the audio- and video processing system (1; 99) comprising:
an eye tracker (9; 107), which tracks eye movements (110; 110a, 110b; 301; 403) of a number of users (11, 111) of the display device (2; 100), while the users (11, 111) watch a video (6) comprising a video stream (7) and an audio stream (8; 201; 501) on the display device (2; 100),
an audio processor (10; 125), which is coupled to the eye tracker (9; 107) and which modifies the audio stream (8; 201; 501) based on the tracked eye movements (110; 110a, 110b; 301; 403) and outputs the modified audio stream (8; 201; 501) with the video stream (7) on the display device (2; 100).

2. Audio and video processing system (1; 99) according to claim 1, the eye tracker (9; 107) comprising a movement analyzer (120) configured to analyze the tracked eye movement (110; 110a, 110b; 301; 403) and extract from the tracked eye movement (110; 110a, 110b; 301; 403) at least a saccade movement and/or a smooth pursuit movement and/or speed of movement and/or direction of movement and/or a fixation and/or a vergence and/or a vestibulo-ocular reflex of the eyes (12, 13) of the users (11, 111).

3. Audio and video processing system (1; 99) according to any one of the preceding claims, comprising an object identifier (121) configured to identify visual objects (104, 105, 106; 302; 303; 401) displayed on the display device (2; 100) based on the tracked eye movement (110; 110a, 110b; 301; 403), and wherein the audio processor (10; 125) is configured to modify in the audio stream (8; 201; 501) sounds (202, 203, 204; 502, 504), which are related to the identified visual objects (104, 105, 106; 302; 303; 401).

4. Audio and video processing system (1; 99) according to claim 3, wherein the object identifier (121) is configured to identify the foveal area (122) a user (11, 111) is looking at and identify the respective object (104, 105, 106; 302; 303; 401) by applying an image recognition algorithm (123) to a section (124; 402) of the displayed image around said foveal area (122), especially by applying a contour detection algorithm (123) and extracting the contoured object (104, 105, 106; 302; 303; 401) from the background and applying the image recognition algorithm (123) on the extracted object (104, 105, 106; 302; 303; 401).

5. Audio and video processing system (1; 99) according to any one of claims 3 to 4, wherein the audio processor (10; 125) is configured to extract sounds (202, 203, 204; 502, 504) in the audio stream (8; 201; 501) pertaining to the identified objects (104, 105, 106; 302; 303; 401), and to modify, especially to apply audio filters and/or amplifiers and/or fade in effects and/or fade out effects, to the sounds (202, 203, 204; 502, 504) in the audio stream (8; 201; 501) pertaining to the identified objects (104, 105, 106; 302; 303; 401), and to combine the audio stream (8; 201; 501) with the modified sounds (202, 203, 204; 502, 504).

6. Audio and video processing system (1; 99) according to any one of claims 3 to 5, wherein the audio processor (10; 125) is configured to modify the audio stream (8, 201; 501) to place the sounds (202, 203, 204; 502; 504) of the identified objects (104, 105, 106; 302; 303; 401) at the place the respective user (11, 111) is looking at.

7. Audio and video processing system (1; 99) according to any one of claims 5 to 6, wherein the sounds (202, 203, 204; 502, 504) in the audio stream (8; 201; 501) pertaining to the identified objects (104, 105, 106; 302; 303; 401) are provided as separate sound objects (202, 203, 204; 502, 504) in the audio stream (8; 201; 501), and/or wherein the audio processor (10; 125) is configured to extract the sounds (202, 203, 204; 502; 504) in the audio stream (8; 201; 501) pertaining to the identified objects (104, 105, 106; 302; 303; 401) based on micro-movements of the objects (104, 105, 106; 302; 303; 401) in the video stream (7).

8. Audio and video processing system (1; 99) according to any one of claims 2 to 7, comprising a video processor, configured to provide visual effects (304, 305) in the display device (2; 100) based on the detected tracked eye movements (110; 110a, 110b; 301; 403), and especially locally dimming up or dimming down a section (124; 402) of the displayed video stream (7) and/or changing the decoding bitrate of the video (6) according to the detected tracked eye movements (110; 110a, 110b; 301; 403).

9. Display device (2; 100) comprising an audio and video processing system (1; 99) according to any one of claims 1 to 8.

10. Method for audio and video processing for a display device (2; 100) with audio reproduction elements (5; 102a, 102b; 108, 112, 113), the method comprising the steps:
tracking eye movements (110; 110a, 110b; 301; 403) of a number of users (11, 111) of the display device (2; 100), while the users (11, 111) watch a video (6) comprising a video stream (7) and an audio stream (8; 201; 501) on the display device (2; 100),
modifying the audio stream (8; 201; 501) based on the tracked eye movements (110; 110a, 110b; 301; 403), and
outputting the modified audio stream (8; 201; 501) with the video stream (7) on the display device (2; 100).

11. Method according to claim 10, wherein tracking (S1) comprises analyzing the tracked eye movement (110; 110a, 110b; 301; 403) and extracting from the tracked eye movement (110; 110a, 110b; 301; 403) at least a saccade movement and/or a smooth pursuit movement and/or speed of movement and/or direction of movement and/or a fixation and/or a vergence and/or a vestibulo-ocular reflex of the eyes (12, 13) of the users (11, 111).

12. Method according to any one of the preceding claims 10 and 11, comprising identifying visual objects (104, 105, 106; 302; 303; 401) displayed on the display device (2; 100) based on the tracked eye movement (110; 110a, 110b; 301; 403), and wherein modifying the audio stream (8; 201; 501) comprises modifying in the audio stream (8; 201; 501) sounds (202, 203, 204; 502, 504), which are related to the identified visual objects (104, 105, 106; 302; 303; 401),
especially wherein the foveal area (122) a user (11, 111) is looking at is identified and the respective object (104, 105, 106; 302; 303; 401) is identified by applying an image recognition algorithm (123) to a section (124; 402) of the displayed image around said foveal area (122), especially by applying a contour detection algorithm (123) and extracting the contoured object (104, 105, 106; 302; 303; 401) from the background and applying the image recognition algorithm (123) on the extracted object (104, 105, 106; 302; 303; 401).

13. Method according claim 12, wherein modifying (S2) the audio stream (8; 201; 501) comprises extracting the sounds (202, 203, 204; 502, 504) in the audio stream (8; 201; 501) pertaining to the identified objects (104, 105, 106; 302; 303; 401), and modifying, especially applying audio filters and/or amplifiers and/or fade in effects and/or fade out effects, to the sounds (202, 203, 204; 502, 504) in the audio stream (8; 201; 501) pertaining to the identified objects (104, 105, 106; 302; 303; 401), and combining the audio stream (8; 201; 501) with the modified sounds (202, 203, 204; 502, 504), and/or
wherein modifying the audio stream (8; 201; 501) comprises placing the sounds (202, 203, 204; 502, 504) of the identified objects (104, 105, 106; 302; 303; 401) at the place the respective user (11, 111) is looking at in the video (6), especially wherein the sounds (202, 203, 204; 502, 504) in the audio stream (8; 201; 501) pertaining to the identified objects (104, 105, 106; 302; 303; 401) are provided as separate sound objects (202, 203, 204; 502, 504) in the audio stream (8; 201; 501), and/or wherein the sounds (202, 203, 204; 502, 504) in the audio stream (8; 201; 501) pertaining to the identified objects (104, 105, 106; 302; 303; 401) are extracted based on micro-movements of the objects (104, 105, 106; 302; 303; 401) in the video stream (7).

14. Method according to any one of claims 10 to 13, comprising providing visual effects (304, 305) in the display device (2; 100) based on the detected tracked eye movements (110; 110a, 110b; 301; 403), and especially locally dimming up or dimming down a section (124; 402) of the displayed video stream (7) and/or changing the decoding bitrate of the video (6) according to the detected tracked eye movements (110; 110a, 110b; 301; 403).
